# DEMANDE DE BREVET EUROPEEN

(11) **EP 2 960 537 A1**
(43) Date de publication de la demande: **30.12.2015**
(21) Numéro de dépôt: 15169881.8
(22) Date de dépôt: 29.05.2015
(51) Int. Cl.: F16D 13/64

(54) **DISQUE D'EMBRAYAGE**

(30) Priorité: 26.06.2014 FR 1455983
(71) Demandeur: Valeo Embrayages, 80009 Amiens Cedex 2 (FR)
(72) Inventeur: Marechal, Olivier, 80000 AMIENS (FR)
(74) Mandataire: Cardon, Nicolas

(57) **Abrégé**

L'invention concerne un disque d'embrayage comportant :
- un moyeu (2) ayant un axe central X, apte à être solidarisé en rotation à un arbre mené, le moyeu présentant une collerette (12) en saillie sur sa périphérie externe,
- un voile (3) annulaire rigide, solidaire en rotation du moyeu, présentant une portion interne (14) en appui contre la collerette, et
- un support (1) présentant une portion interne (13), annulaire, en appui contre la collerette,
le voile et le support étant disposés de part et d'autre de la collerette et solidarisés l'un contre l'autre de sorte à pincer la collerette du moyeu entre les portions internes respectives du support et du voile,
dans lequel le support est élastiquement déformé de telle sorte que le support présente une zone élastiquement déformée de forme tronconique (13) et exerce une force élastique de serrage de la collerette contre la portion interne du voile.

## Description

### Domaine technique de l'invention

L'invention se rapporte au domaine des dispositifs d'embrayage pour véhicule automobile et se rapporte plus particulièrement à un disque d'embrayage.

Le disque d'embrayage peut être intégré à un embrayage apte à relier sélectivement le moteur thermique à la boîte de vitesses, afin de filtrer les vibrations dues aux acyclismes du moteur. En variante, dans une telle application, le disque d'embrayage peut être intégré à un disque de friction de l'embrayage ou à un convertisseur de couple hydrodynamique.

### Etat de la technique

Dans l'état de la technique, afin de permettre un accouplement entre un arbre menant, tel qu'un vilebrequin d'un moteur thermique, et un arbre mené, tel qu'un arbre d'entrée d'une boîte de vitesses, il est connu des dispositifs d'embrayage. Un dispositif d'embrayage comporte un disque de friction comportant un moyeu destiné à être solidarisé en rotation à l'arbre mené. Ce montage doit être à même de compenser les désalignements inévitables entre l'arbre moteur et l'arbre mené, qui sont la cause de bruits et d'usures.

Dans l'état de la technique, à titre d'exemple, le document FR2808850 enseigne un embrayage à friction rigide, comprenant un disque de friction qui inclut un disque de support portant des garnitures de friction, un voile annulaire solidaire du disque, et un moyeu solidarisable en rotation avec un arbre mené et comprenant une denture externe qui engrène avec une denture interne du voile. Le disque de support est appliqué axialement sur des éléments périphériques du moyeu par un rebord tronconique non continu constitué de plusieurs pattes obliques réparties autour de l'axe de rotation et séparées les unes des autres par des fentes, de façon à serrer élastiquement les éléments périphériques du moyeu. Ce rebord tronconique est formé par une première étape de découpe de fentes radiales dans la partie annulaire radialement interne du disque, puis par une seconde étape de pliage vers l'extérieur des pattes délimitées par ces fentes radiales.

Ces pattes obliques présentent l'inconvénient d'être fragiles.

De plus, la fabrication des pattes obliques est complexe puisqu'elle nécessite les deux étapes pré-citées.

L'étape de pliage des pattes présente l'inconvénient de nécessiter une grande précision sur l'angle de pliage des pattes obliques du voile, de façon à ce que cet angle soit en conformité avec l'angle des éléments périphériques du moyeu.

### Objet de l'invention

L'invention a notamment pour but de remédier aux inconvénients précités, en fournissant un disque de friction robuste et simple à fabriquer.

Selon un mode de réalisation, l'invention concerne un disque d'embrayage comportant :
un moyeu ayant un axe central X, apte à être solidarisé en rotation à un arbre mené, le moyeu présentant une collerette en saillie sur sa périphérie externe,
un voile annulaire rigide, solidaire en rotation du moyeu, présentant une portion interne en appui contre la collerette, et
un support portant des garnitures de friction et présentant une portion interne, annulaire, en appui contre la collerette,
le voile et le support étant disposés de part et d'autre de la collerette et solidarisés l'un contre l'autre par une pluralité d'organes de fixation, de sorte à pincer la collerette du moyeu entre les portions internes respectives du support et du voile,
dans lequel le support est élastiquement déformé par un appui continu de la collerette sur la portion interne du support de telle sorte que le support présente une zone élastiquement déformée de forme tronconique et exerce une force élastique de serrage de la collerette contre la portion interne du voile.

Ainsi, un tel disque d'embrayage est robuste car il ne comporte pas de découpes de fentes radiales dans la partie annulaire radialement interne du disque.

En outre, un tel disque d'embrayage est simple à fabriquer car le disque ne nécessite pas d'être préformé sur sa portion interne destinée à être en appui contre la collerette. En effet, la portion interne du support se déforme élastiquement sous une forme tronconique lors de l'assemblage du support sur l'ensemble formé par le voile et le moyeu.

Selon d'autres modes de réalisation avantageux, un tel disque d'embrayage peut présenter une ou plusieurs des caractéristiques suivantes :
- le support présente, dans la zone élastiquement déformée de forme tronconique, une pluralité d'orifices d'assouplissement qui sont chacun radialement situés entre un organe de fixation et l'axe central X du moyeu. Une telle caractéristique permet notamment d'améliorer la flexibilité du support de garnitures.
- la zone élastiquement déformée de forme tronconique présente une périphérie interne continue spatialement. Une telle caractéristique permet notamment de rendre robuste le support de garnitures.
- le voile présente des orifices de passage d'air. Une telle caractéristique permet notamment d'améliorer l'inertie du disque de friction et sa régulation thermique.
- les orifices d'assouplissement du support sont alignés avec les orifices de passage d'air du voile. Cette caractéristique permet notamment d'améliorer la régulation thermique.
- le moyeu est réalisé par frittage d'une poudre métallique. Ainsi, le moyeu peut notamment avoir des formes complexes.
- la portion interne du support vient en butée sur une forme tronconique de la collerette, la forme tronconique présentant un demi-angle au sommet de cône supérieur ou égal à 70°. Cette forme de collerette du moyeu permet notamment de limiter le basculement du voile et du support par rapport au moyeu. Cette valeur de demi-angle au sommet du cône est avantageuse car elle implique un angle de pliage tronconique faible du support entre les orifices d'assouplissement. Ainsi, la force de déformation exercée localement sur la portion interne du support est limitée. Ainsi, la matière du support située entre deux orifices d'assouplissement subit une déformation élastique limitée et ne casse pas.
- le support est composé d'un acier comportant entre 0.65 % et 0.73% de carbone.
- l'épaisseur du support est comprise entre 0.7 mm et 1 mm. Cette caractéristique permet notamment de rendre le support flexible.
- le voile comporte une denture interne coopérant avec une denture externe du moyeu bordant la collerette du moyeu. Cette caractéristique permet notamment de rendre le voile et le moyeu solidaires en rotation. Cette caractéristique permet également de mettre le voile en butée sur le moyeu.
- le support est formé par deux dispositifs de progressivité sur chacun desquels est montée une garniture de friction.
- le support est formé par deux dispositifs de progressivité et une rondelle, sur chacun des dispositifs de progressivité est montée une garniture de fiction, la rondelle présentant une portion interne, la collerette du moyeu étant pincée entre les portions internes respectives de la rondelle et du voile.

Selon un mode de réalisation, l'invention fournit un composant pour système de transmission d'un véhicule automobile, le composant étant notamment un double volant amortisseur, un convertisseur de couple hydrodynamique ou un disque de friction, comprenant un disque précédemment décrit.

Selon un mode de réalisation, l'invention fournit un procédé de fabrication d'un disque d'embrayage, comportant :
fournir un moyeu ayant un axe central X, apte à être solidarisé en rotation à un arbre mené, le moyeu présentant une collerette en saillie sur sa périphérie externe,
fournir un voile annulaire rigide apte à être solidarisé en rotation au moyeu et présentant une portion interne ; et
fournir un support portant des garnitures de friction et présentant une portion interne, annulaire,
le procédé de fabrication comportant en outre :
   disposer le voile et le support de part et d'autre de la collerette ;
   solidariser le voile et le support l'un contre l'autre par une pluralité d'organes de fixation, ladite solidarisation entraînant une déformation élastique du support par un appui continu de la collerette de telle sorte qu'une zone préalablement plane du support soit déformée sous forme d'une zone élastiquement déformable de forme tronconique et que le support exerce une force élastique de serrage de la collerette contre la portion interne du voile.

Un autre but de l'invention est de réduire l'inertie du disque de friction.

Un autre but de l'invention est de permettre la régulation thermique.

Un autre but de l'invention est de rendre flexible le support de garniture.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

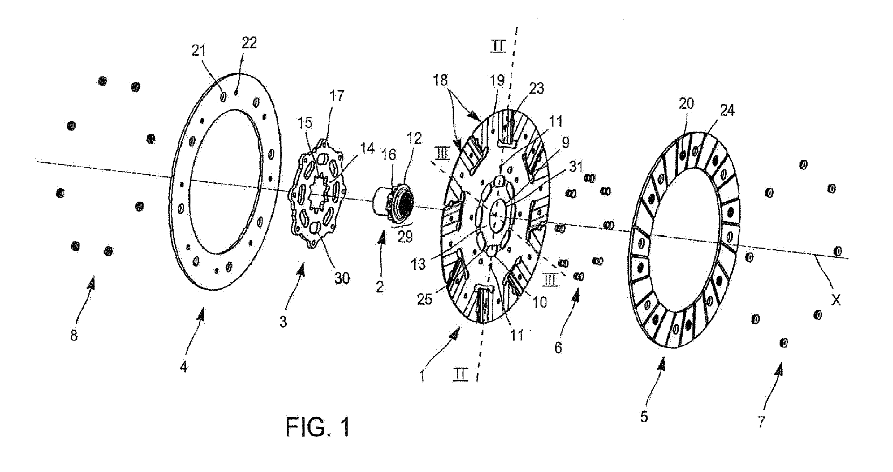

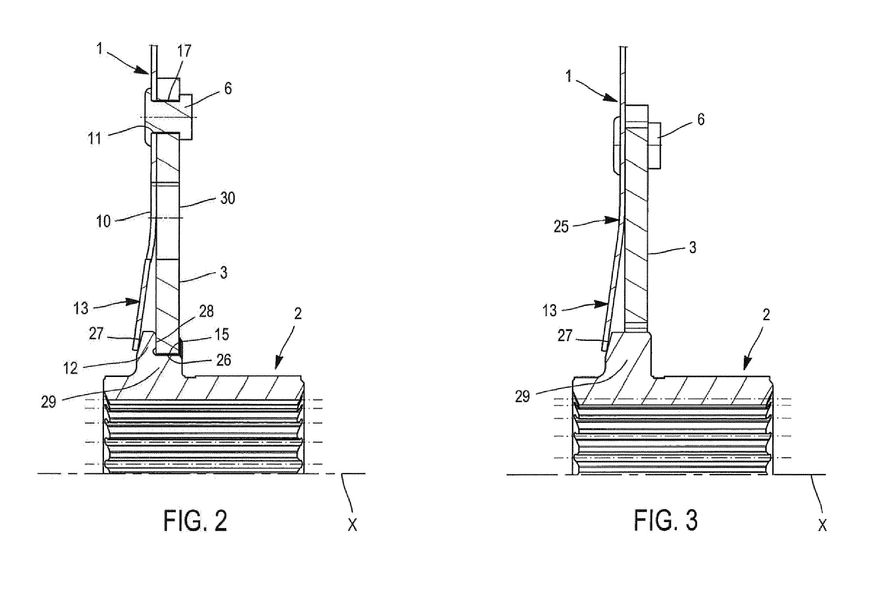

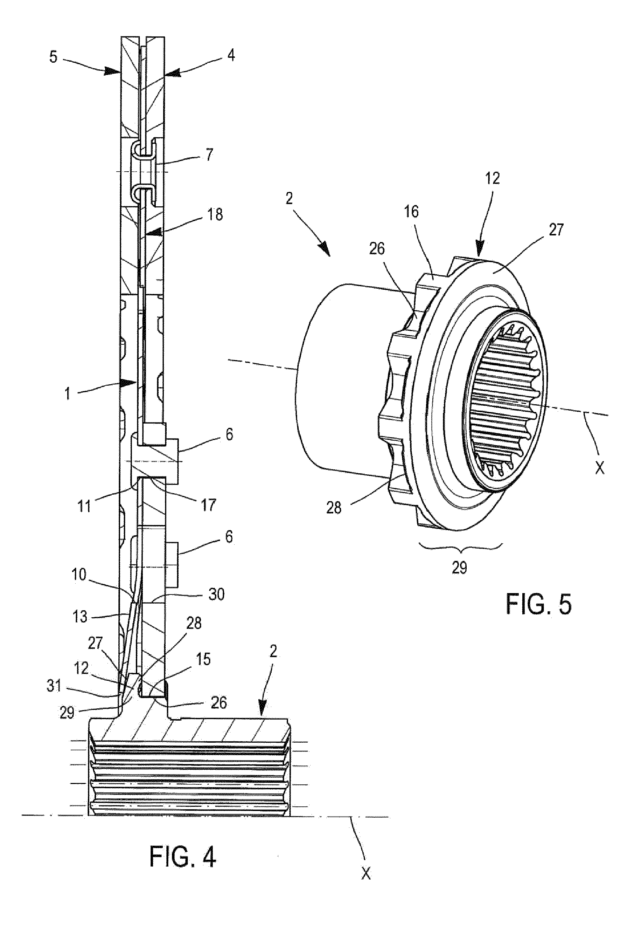

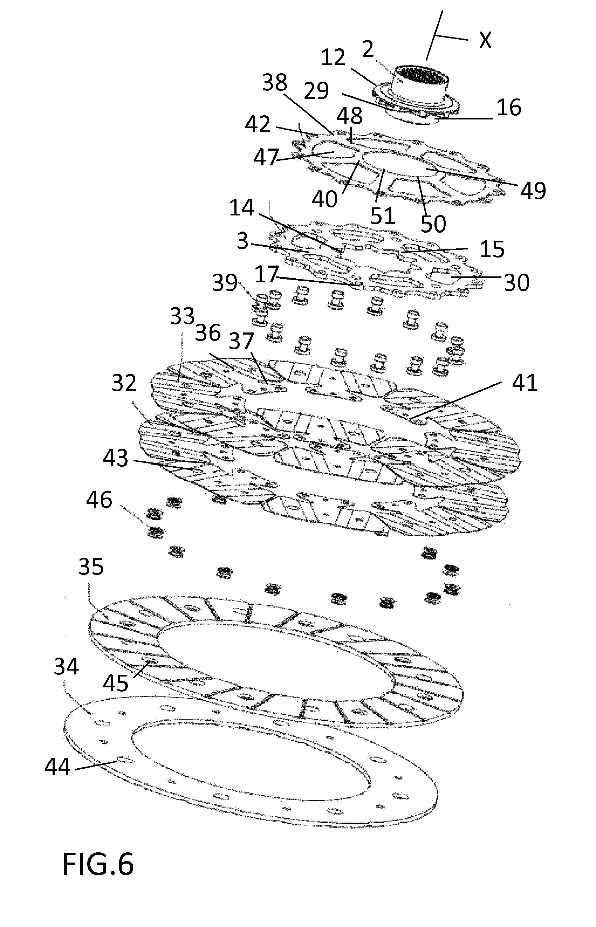

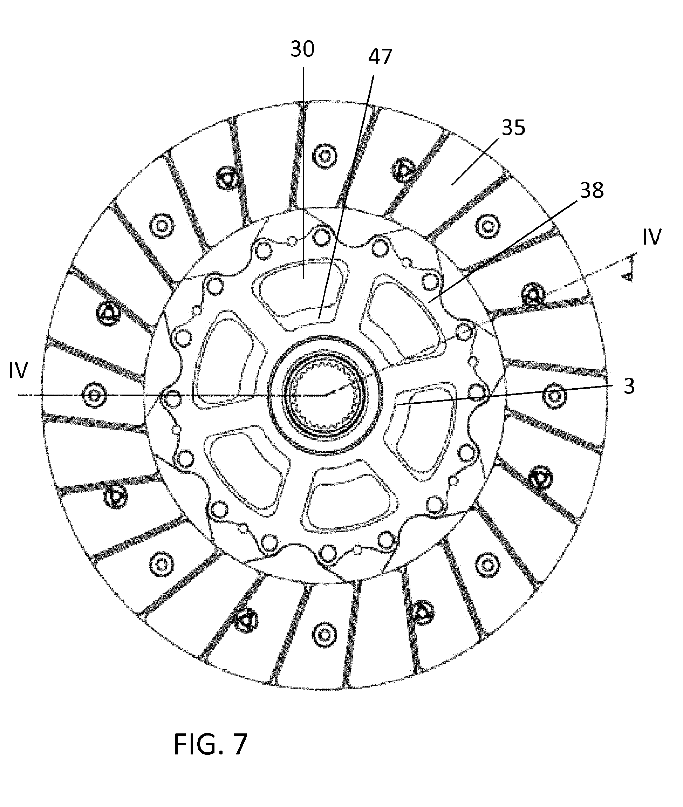

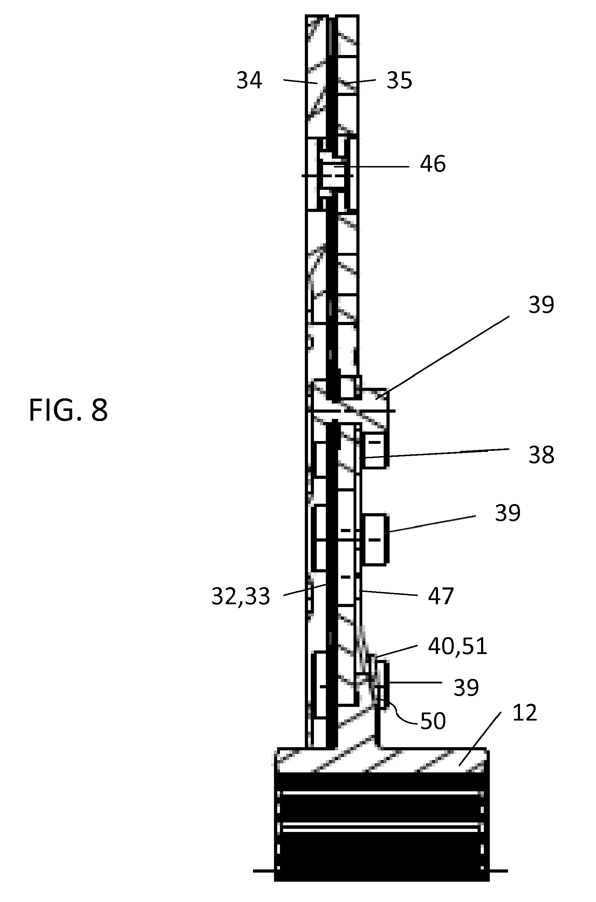

Sur ces figures :
- **La** **figure 1** est un éclaté d'un disque d'embrayage.
- **La** **figure 2** est une demi vue partielle en coupe selon l'axe II-II du disque d'embrayage de la figure 1.
- **La** **figure 3** est une demi vue partielle en coupe selon l'axe III-III du disque d'embrayage de la figure 1.
- **La** **figure 4** est une demi vue en coupe selon l'axe II-II du disque d'embrayage de la figure 1.
- **La** **figure 5** est une vue en perspective du moyeu du disque d'embrayage.
- **La** **figure 6** est un éclaté d'un disque d'embrayage selon une variante de l'invention.
- **La** **figure 7** est vue du disque d'embrayage, selon la variante de la figure 6.
- **La** **figure 8** est une demi vue en coupe selon l'axe IV-IV du disque d'embrayage de la figure 7.

### Description détaillée de modes de réalisation

Dans la description et les revendications, on utilisera, les termes "externe" et "interne" ainsi que les orientations "axiale" et "radiale" pour désigner, selon les définitions données dans la description, des éléments du disque d'embrayage. Par convention, l'orientation "radiale" est dirigée orthogonalement à l'axe X de rotation du disque d'embrayage déterminant l'orientation "axiale" et, de l'intérieur vers l'extérieur en s'éloignant dudit axe X, l'orientation "circonférentielle" est dirigée orthogonalement à l'axe X de rotation du disque d'embrayage et orthogonalement à la direction radiale. Les termes "externe" et "interne" sont utilisés pour définir la position relative d'un élément par rapport à un autre, par référence à l'axe X, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par arrière et un élément destiné à être placé proche de la boîte de vitesses étant désigné par avant. Les termes « radialement situé » signifient situés dans le plan perpendiculaire à l'axe X, à une distance radiale définie de l'axe X.

Le disque d'embrayage est destiné à être disposé dans la chaîne de transmission d'un véhicule automobile, entre le moteur à explosion et la boîte de vitesse. Un tel disque de friction est destiné à être monté solidaire en rotation d'un arbre d'entrée de la boîte de vitesses, entre un plateau de pression d'un embrayage et un plateau de réaction, solidaire en rotation du vilebrequin du moteur à explosion. Lors d'une opération d'embrayage, le plateau de pression serre le disque de friction contre le plateau de réaction et le couple est alors transmis du vilebrequin vers l'arbre d'entrée de la boîte de vitesses.

En référence à la figure 1, un éclaté d'un disque de friction est représenté. Un support 1 destiné à porter des garnitures de friction 4 et 5 annulaires est représenté. Ce support 1 a la forme d'un disque qui présente un orifice central 9 qui lui permet d'être enfilé sur un moyeu 2 d'axe X. Le moyeu 2 présente un bourrelet 29 comportant une collerette 12 contre laquelle une portion interne 13 du support 1 vient en butée axiale. Le disque de friction comprend également un voile 3 annulaire. Une portion interne 14 du voile 3 vient en appui sur l'autre bord de la collerette 12. Cette portion interne 14 présente une denture interne 15 qui coopère avec une denture externe 16 du bourrelet 29. Le voile 3 présente des orifices de fixation 17 sur sa portion externe. Ces orifices de fixation 17 sont radialement alignés avec des orifices de fixation 11 du support 1, afin de permettre à des rivets 6 de fixer le support 1 et le voile 3 ensemble en les plaquant l'un contre l'autre

Le support 1 présente au niveau de sa région périphérique annulaire externe de support des garnitures de friction des moyens de progressivité aptes à permettre une progressivité de l'engagement, au moment du serrage du disque d'embrayage entre le plateau de pression et le plateau de réaction. Dans le mode de réalisation représenté, les moyens de progressivité sont formés par des pâles 18 axialement élastiques qui comportent des zones de portée en contact avec l'une des garnitures de friction 4 et des zones de portée en contact avec l'autre des garnitures de friction 5. Les pâles 18, présentent des orifices 19, 23. Les garnitures de friction 4 et 5 présentent des orifices 21, 22, 20, 24 radialement alignés avec les orifices 19 et 23 des pâles 18 du support 1. Les garnitures de friction 4 et 5 sont fixées de part et d'autre du support 1 à l'aide d'une pluralité de rivets 7 et 8 traversant les orifices respectifs du support 1 et des deux garnitures de friction 4, 5.

Le support 1 est usiné de façon à présenter des orifices oblongs 10 alignés sur un diamètre du support 1 et radialement situés entre le centre de l'orifice central 9 et les orifices de fixation 11. Ces orifices oblongs 10 sont séparés les uns des autres par des pattes 25. Le voile 3 présente des orifices oblongs 30 en vis-à-vis des orifices oblongs 10 du support 1, de façon à ce que les orifices se superposent lorsque le support 1 et le voile 3 sont fixés l'un contre l'autre.

Les orifices oblongs 10 du support 1 ont une double fonction. La première fonction des orifices oblongs 10 est de permettre l'assouplissement du support 1, de façon à ce qu'il soit élastiquement déformable sur une portion tronconique radialement interne délimitée par la périphérie de l'orifice central 9 et les orifices oblongs 10. Avantageusement, afin de renforcer cette fonction, le support présente une épaisseur faible et est fabriqué dans un matériau souple, par exemple un acier à ressort.

La seconde fonction de ces orifices oblongs 10 alignés avec les orifices oblongs 30 du voile 3 est de permettre un passage d'air pour autoriser une ventilation de façon à refroidir le disque d'embrayage qui s'échauffe lors du frottement des garnitures de friction contre les plateaux de réaction et de pression.

Un procédé permettant de fabriquer un disque d'embrayage va être décrit en référence à la figure 1. Par exemple, le support 1 est usiné à partir d'une plaque fine d'épaisseur comprise entre 0.7 et 1 mm en acier. Des orifices oblongs 10 sont usinées circonférentiellement à l'intérieur du support 1, chacun étant séparée de l'autre par une patte 25. Au moins une portion interne 13 du support 1 est plane.

Le procédé comporte l'étape de disposer le voile 3 et le support 1 de part et d'autre de la collerette selon l'axe X en alignant les orifices de fixation 11 et 17 afin de solidariser le voile 3 et le support 1 l'un contre l'autre par une pluralité de rivets 6.

Cette solidarisation entraîne une déformation élastique du support 1. Localement, le support 1 est dans le plan accolé au voile 3 au niveau des rivets 6. En revanche la périphérie interne 31 du support 1 ne peut pas se placer dans ce plan accolé au voile. Quand le support et le voile sont solidarisés, la portion interne 13 du support 1 rencontre axialement le rebord tronconique 27 de la collerette 12 du moyeu 2. Ce rebord tronconique 27 externe forme un appui continu et force ainsi le décalage de la périphérie interne 31 du support 1 vers le plan accolé à la surface conique du bord tronconique 27. Ainsi, partant d'une portion interne 13 plane du support 1, le procédé permet d'obtenir une zone élastiquement déformée de forme tronconique. Cette zone élastiquement déformée exerce, en réaction, une force élastique de serrage de la collerette 12 contre la portion interne du voile 13. Cette déformation élastique exerce une force de rappel sur le support 1 dans un plan perpendiculaire à l'axe de rotation du vilebrequin lors de l'opération d'embrayage. En effet, les axes de rotations X et du vilebrequin peuvent être légèrement désalignés. Ainsi, les plans perpendiculaires à ces axes peuvent n'être qu'imparfaitement parallèles. Lors de l'opération d'embrayage, la déformation élastique au niveau de la portion interne 13 du support 1 rend le support 1 apte à basculer d'un plan perpendiculaire à l'axe de rotation X vers un plan perpendiculaire à l'axe de rotation du vilebrequin. Ainsi, l'embrayage ne subit pas d'usure prématurée liée à ce désalignement. Cette déformation est comparable à un ressort. Cette déformation est totalement ou partiellement réversible. Par exemple, cette déformation élastique peut être réversible, c'est-à-dire qu'après une opération de démontage éventuelle du disque de friction en retirant les rivets 6, la portion interne 13 initialement plane du support 1 puis déformée élastiquement lors du procédé de fabrication du disque de friction, peut retourner à son état plan initial.

Ainsi, la portion interne 13 est élastiquement déformée sous une forme tronconique et exerce une force élastique de serrage de la collerette 12 contre la portion interne du voile 3.

Cette déformation est élastique car le support 1 est initialement, au moins localement, plat sur cette portion interne 13.

Ce procédé présente l'avantage de ne pas nécessiter de préformation de la portion interne 13 du support 1 en forme de cône. De plus, la périphérie interne 31 du support 1 étant continue, le support 1 quoique déformé n'est pas fragilisé sur sa surface déformée.

Les figures 2 et 3 représentent la collerette 12 du moyeu 2 pincée entre le voile 3 et le support 1. Le plan de coupe de la figure 2 passe par un décrochement 26 du moyeu 2, par un orifice oblong 10 du support 1 et par un orifice oblong 30 du voile 3, ainsi que par un rivet 6 de fixation du support 1 et du voile 3 entre eux. Le plan de coupe de la figure 3 passe par une patte 25 du support 1 entre deux orifices oblongs 10 adjacents.

Sur les figures 2 et 3, le support 1, le moyeu 2 et le voile 3 de la figure 1 sont assemblés en les rapprochant axialement et en fixant le voile 3 et le support 1 à l'aide des rivets 6. Lors de cet assemblage, le support 1 se déforme localement élastiquement de façon à exercer une précharge contre le moyeu 2. En effet, les pattes 25 sont rendues flexibles par la présence des trous oblongs 10 les encadrant chacune diamétralement. Ces pattes se déforment élastiquement dans la direction radiale, ce qui permet de déformer élastiquement le support 1 par un appui continu d'un bord tronconique 27 de la collerette 12 du moyeu 2 sur la portion interne 13 du support 1.

Afin de rendre le support 1 davantage flexible, l'épaisseur du support 1 est avantageusement comprise entre 0,7 et 1 mm. Avantageusement, le support 1 est réalisé à partir d'un feuillage d'acier à ressort. L'acier est par exemple un acier de type C67S tel que défini dans la norme NF EN 10132-4. Un tel acier C67S comporte entre 0.65% et 0.73% de carbone. Ainsi, le support 1 peut être suffisamment flexible pour que la portion interne soit déformable.

Sur l'autre flanc de la collerette 12 se trouve une surface d'appui 28. Le voile 3 vient en butée de la collerette 12 sur cette surface d'appui 28. La denture interne 15 du voile 3 se positionne dans une denture externe 16 du moyeu 2. La denture interne 15 du voile 3 coopère avec la denture externe16 du moyeu 2.

En référence à la figure 4, des fonctions du disque de friction assemblé vont être décrites.

L'appui exercé par la zone annulaire tronconique 13 du support 1 sur le rebord tronconique 27 du moyeu 2 est continu. En effet, la périphérie interne 31 du support 1 est continue spatialement. Un appui continu sera compris comme un contact diamétralement continu entre le support 1 et le rebord tronconique 27 de la collerette. Ainsi, la périphérie interne 31 du support 1 est continument en contact sur la collerette du moyeu 2 et exerce continument une précharge sur le support 1. En d'autres termes, la périphérie interne 31 ne présente pas de découpes et de pattes comme dans l'art antérieur. La périphérie interne 31 de l'orifice circulaire 9 peut être un cercle.

Des découpes supplémentaires éventuelles entre les rivets 6 et les rivets 7 peuvent être prévues en option, afin de réduire l'inertie du disque de friction, de permettre le passage de l'air chaud ou de rendre davantage flexible le support 1 afin de compenser les défauts d'alignement éventuels avec les plateaux de pression, de façon à prévenir l'usure prématurée de l'embrayage se produisant en présence d'un défaut d'alignement.

En référence à la figure 5, le moyeu 2 du disque de friction va être décrit.

Le moyeu 2 est formé par un procédé de frittage d'une poudre. Le procédé de frittage comporte deux étapes, à savoir une première étape de remplissage d'un moule avec de la poudre et une deuxième étape de compression de la poudre. Le moule comporte une matrice définissant une cavité destinée à recevoir la poudre et un poinçon permettant de comprimer la poudre à l'intérieur de la matrice. Dans la première étape de remplissage, un mélange comportant de la poudre métallique, des additifs et des lubrifiants, utilisés pour faciliter la compression de la poudre, est introduit dans la matrice. Par la suite, lors de sa compression, la poudre est soumise à un cycle thermique permettant la génération de soudures entre les grains de poudre. Lors de la première phase du cycle thermique, la poudre est chauffée jusqu'à une température suffisante pour évaporer le lubrifiant et obtenir une température homogène. Puis, dans une seconde phase du cycle thermique, la poudre compressée est portée à la température de frittage, légèrement en dessous de la température de fusion du matériau. La température de frittage est généralement de l'ordre de 1120°C. Enfin, dans une dernière phase du cycle thermique, le moyeu ainsi formé est refroidit lentement.

Ce procédé de frittage permet notamment de fabriquer un moyeu 2 ayant des formes géométriques complexes à moindre coût. Le moyeu fabriqué ainsi par frittage comporte un bourrelet 29 comportant une collerette 12. L'épaisseur du bourrelet 29 est périodiquement réduite de façon à ce que la surface d'appui 28 de cette collerette 12 soit bordée par une denture externe 16 apte à coopérer avec une denture interne 15 du voile 3.

Ainsi, les sommets des dents du moyeu sont prolongées radialement vers l'extérieur, à une extrémité axiale du rebord 26, par un rebord qui a une face radiale annulaire du côté des dents et une face oblique, en forme de secteur de tronc de cône de sommet environ 70°, du côté opposé. Lorsque le voile annulaire est en place sur la collerette du moyeu, les dentures du voile et du moyeu étant en prise, la denture interne du voile se trouve alors en butée axiale sur la collerette.

Cette forme de collerette du moyeu permet de limiter le basculement du voile et du support par rapport au moyeu car la collerette est destinée à être pincée entre la zone annulaire tronconique et le voile. Ainsi, lorsque le voile 3 et le support 1 basculent par rapport au moyeu, la zone annulaire tronconique 13 prend appui sur la collerette 12, et génère un effort élastique de rappel du support 1 vers une position de repos perpendiculaire à l'axe, destiné à résister à l'encontre du basculement.

En référence à la figure 6, un éclaté d'un disque de friction est représenté selon une variante de l'invention. Deux dispositifs de progressivité 32,33 destinés à porter des garnitures de friction 34,35 annulaires sont représentés. Ces dispositifs 32,33 ont chacun la forme d'un disque. Chacun de ces dispositifs de progressivité comporte une pluralité de pâles telles que 36. Les pâles 36 sont chacune reliées, pour un même dispositif de progressivité, par fixation d'une portion interne 37 de ladite pâle 36 à une rondelle 38 au moyen d'au moins un rivet tel que 39.

Comme pour le disque représenté en figure 1, le moyeu 2 présente un bourrelet 29 comportant une collerette 12 contre laquelle une portion interne 40 de la rondelle 38 vient en butée axiale. La portion interne 14 du voile 3 vient en appui sur l'autre bord de la collerette 12. La denture interne 15 de la portion interne 14 coopère avec la denture externe 16 du bourrelet 29. Les orifices de fixation 17 du voile 3 sont radialement alignés avec des orifices de fixation 41 formés par chacun des dispositif s de progressivité 32,33 et avec des orifices de fixation 42 formés par la rondelle 38, afin de permettre aux rivets 39 non seulement de fixer les dispositifs de progressivité 32,33 et la rondelle 38 ensemble mais également le voile 3, le voile 3 étant pris en sandwich entre la portion interne 37 des dispositifs de progressivité et la rondelle 38.

Les dispositifs de progressivité 32,33 présentent chacun au niveau de leur région périphérique annulaire externe une garniture de friction telle que 34,35. Les dispositifs de progressivité 32,33 sont aptes à permettre une progressivité de l'engagement, au moment du serrage du disque d'embrayage entre le plateau de pression et le plateau de réaction. Pour ce faire, pour un dispositif de progressivité donné, les pâles 36 sont axialement élastiques et comportent des zones de portée en contact avec l'une des garnitures de friction 34 et des zones de portée en contact avec l'autre dispositif de progressivité. Les pâles 36, présentent des orifices 43. Les garnitures de friction 34,35 présentent des orifices 44,45 radialement alignés avec les orifices 43 des pâles 36 des deux dispositifs de progressivité 32,33. Les garnitures de friction 34,35 sont fixées sur une face de chacun des dispositifs de progressivité 32,33 à l'aide d'une pluralité d'une pluralité de rivets 46 traversant les orifices respectifs de chacun des dispositifs de progressivité 32,33 1 et des deux garnitures de friction 34, 35.

La rondelle 38 présente des orifices 47 radialement situés entre l'axe X et les orifices de fixation 42. Ces orifices 47 sont séparés les uns des autres par des pattes 48. Le voile 3 présente des orifices oblongs 30 en vis-à-vis des orifices 47 de la rondelle 38, de façon à ce que les orifices se superposent lorsque la rondelle 38 et le voile 3 sont fixés l'un contre l'autre.

Comme pour l'exemple de la figure 1, les orifices 47 de la rondelle 38 ont une double fonction. La première fonction des orifices 47 est de permettre l'assouplissement de la rondelle 38, de façon à ce qu'elle soit élastiquement déformable sur une portion tronconique radialement interne délimitée par la périphérie d'un orifice central 49 de la rondelle 38 et les orifices 47. Avantageusement, afin de renforcer cette fonction, le support présente une épaisseur faible et est fabriqué dans un matériau souple, par exemple un acier à ressort.

La seconde fonction de ces orifices 47 alignés avec les orifices oblongs 30 du voile 3 est de permettre un passage d'air pour autoriser une ventilation de façon à refroidir le disque d'embrayage qui s'échauffe lors du frottement des garnitures de friction contre les plateaux de réaction et de pression.

La figure 7 illustre le disque d'embrayage selon la variante de l'invention. On observe que les orifices 30 du voile 3 sont alignés avec les orifices 47 de la rondelle 38.

Le procédé permettant de fabriquer un disque d'embrayage selon cette variante va être décrit en référence à la figure 6. Les pâles 36sont usinées à partir d'une plaque fine d'épaisseur comprise entre 0.7 et 1 mm en acier. Des orifices 47 sont usinés circonférentiellement à l'intérieur de la rondelle 38, chacun étant séparé de l'autre par une patte 48. Au moins une portion interne 40 de la rondelle 38 1 est plane.

Le procédé comporte l'étape de poser, d'une part, les deux dispositifs de progressivité 32,33 et le voile 3, et d'autre part la rondelle 38, de part et d'autre de la collerette selon l'axe X en alignant les orifices de fixation 41,17,42 afin de solidariser les dispositifs de progressivité 32,33, le voile 3 et la rondelle 38 les uns contre les autres par une pluralité de rivets 39.

Cette solidarisation entraîne une déformation élastique de la rondelle 38. Localement, la rondelle 38 est dans le plan accolé au voile 3 au niveau des rivets 39. En revanche la périphérie interne de la rondelle 38 ne peut pas se placer dans ce plan accolé au voile. Quand la rondelle 38 et le voile 3 sont solidarisés, la portion interne 40 de la rondelle 38 rencontre axialement le rebord tronconique 27 de la collerette 12 du moyeu 2. Ce rebord tronconique 27 externe forme un appui continu et force ainsi le décalage de la périphérie interne 50 de la rondelle 38 vers le plan accolé à la surface conique du bord tronconique 27. Ainsi, partant d'une portion interne plane 51 de la rondelle 38, le procédé permet d'obtenir une zone élastiquement déformée de forme tronconique. Cette zone élastiquement déformée exerce, en réaction, une force élastique de serrage de la collerette 12 contre la portion interne du voile 3. Cette déformation élastique exerce une force de rappel sur la rondelle 38 dans un plan perpendiculaire à l'axe de rotation du vilebrequin lors de l'opération d'embrayage. En effet, les axes de rotations X et du vilebrequin peuvent être légèrement désalignés. Ainsi, les plans perpendiculaires à ces axes peuvent n'être qu'imparfaitement parallèles. Lors de l'opération d'embrayage, la déformation élastique au niveau de la portion interne 51 de la rondelle 38 rend la rondelle 38 apte à basculer d'un plan perpendiculaire à l'axe de rotation X vers un plan perpendiculaire à l'axe de rotation du vilebrequin. Ainsi, l'embrayage ne subit pas d'usure prématurée liée à ce désalignement. Cette déformation est comparable à un ressort. Cette déformation est totalement ou partiellement réversible. Par exemple, cette déformation élastique peut être réversible, c'est-à-dire qu'après une opération de démontage éventuelle du disque de friction en retirant les rivets 39, la portion interne initialement plane de la rondelle 38 puis déformée élastiquement lors du procédé de fabrication du disque de friction, peut retourner à son état plan initial.

Ainsi, la portion interne 51 est élastiquement déformée sous une forme tronconique et exerce une force élastique de serrage de la collerette 12 contre la portion interne du voile 3.

Cette déformation est élastique car la rondelle 38 est initialement, au moins localement, plat sur cette portion interne 51. Ce procédé présente l'avantage de ne pas nécessiter de préformation de la portion interne 13 du support 1 en forme de cône. De plus, la périphérie interne 50 de la rondelle 38 étant continue, la rondelle 38 quoique déformé n'est pas fragilisé sur sa surface déformée.

Sur la figure 8 on observe une vue en coupe en perspective. On observe les deux dispositifs de progressivité 32,33 disposés contre une face du voile 3. On observe également la rondelle 38 placée contre une face opposée du voile 3. Il peut être remarqué qu'un même rivet 39 sert avantageusement non seulement à la fixation de la rondelle 38 aux dispositifs de progressivité 32,33 mais également à la fixation du voile sur les dispositifs de progressivité 32,33 et sur la rondelle 38.

Dans un exemple non illustré, il peut être prévu de pincer la collerette entre le voile 3 et deux dispositifs de progressivité qui sont formés par une pièce chacun.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Disque d'embrayage comportant :
- un moyeu (2) ayant un axe central X, apte à être solidarisé en rotation à un arbre mené, le moyeu (2) présentant une collerette (12) en saillie sur sa périphérie externe,
- un voile (3) annulaire rigide, solidaire en rotation du moyeu (2), présentant une portion interne (14) en appui contre la collerette (12), et
- un support (1) portant des garnitures de friction (4, 5) et présentant une portion interne (13), annulaire, en appui contre la collerette (12),
le voile (3) et le support (1) étant disposés de part et d'autre de la collerette (12) et solidarisés l'un contre l'autre par une pluralité d'organes de fixation (6), de sorte à pincer la collerette (12) du moyeu (2) entre les portions internes respectives du support et du voile (13, 14),
dans lequel le support (1) est élastiquement déformé par un appui continu de la collerette (12) sur la portion interne (13) du support de telle sorte que le support présente une zone élastiquement déformée de forme tronconique (13) et exerce une force élastique de serrage de la collerette (12) contre la portion interne du voile (14).

2. Disque d'embrayage selon la revendication 1, dans lequel le support (1) présente, dans la zone élastiquement déformée de forme tronconique (13), une pluralité d'orifices d'assouplissement (10) qui sont chacun radialement situés entre un organe de fixation (6) et l'axe central X du moyeu.

3. Disque d'embrayage selon la revendication 2, dans lequel la zone élastiquement déformée de forme tronconique (13) présente une périphérie interne (31) continue.

4. Disque d'embrayage selon la revendication 3, dans lequel le voile (3) présente des orifices (30) de passage d'air.

5. Disque d'embrayage selon la revendication 4, dans lequel les orifices d'assouplissement (10) du support sont alignés avec les orifices de passage d'air (30) du voile.

6. Disque d'embrayage selon l'une quelconque des revendications 1 à 5, dans lequel le moyeu (2) est réalisé par frittage d'une poudre métallique.

7. Disque d'embrayage selon l'une quelconque des revendications 1 à 6, dans lequel la portion interne (13) du support (1) vient en butée sur une forme tronconique (27) de la collerette (12), la forme tronconique (27) présentant un demi-angle au sommet de cône supérieur ou égal à 70°.

8. Disque d'embrayage selon l'une quelconque des revendications 1 à 9, dans lequel le support (1) est composé d'un acier comportant entre 0.65 % et 0.73% de carbone.

9. Disque d'embrayage selon l'une quelconque des revendications 1 à 8, dans lequel l'épaisseur du support est comprise entre 0.7 mm et 1 mm.

10. Disque d'embrayage selon l'une quelconque des revendications 1 à 9, dans lequel le voile (3) comporte une denture interne (15) coopérant avec une denture externe (16) du moyeu (2) bordant la collerette (12) du moyeu.

11. Disque selon l'une des revendications 1 à 10, **caractérisé en ce que** le support est formé par deux dispositifs de progressivité sur chacun desquels est montée une garniture de friction.

12. Disque selon l'une des revendications 1 à 10, **caractérisé en ce que** le support est formé par deux dispositifs de progressivité (32,33) et une rondelle (38), sur chacun des dispositifs de progressivité est montée une garniture de fiction, la rondelle présentant une portion interne, la collerette (12) du moyeu (2) étant pincée entre les portions internes respectives de la rondelle et du voile (13, 14).

13. Composant pour système de transmission d'un véhicule automobile, le composant étant notamment un double volant amortisseur, un convertisseur de couple hydrodynamique ou un disque de friction, comprenant un disque selon l'une quelconque des revendications 1 à 12.

14. Procédé de fabrication d'un disque d'embrayage, comportant :
- fournir un moyeu (2) ayant un axe central X, apte à être solidarisé en rotation à un arbre mené, le moyeu présentant une collerette (12) en saillie sur sa périphérie externe,
- fournir un voile (3) annulaire rigide apte à être solidarisé en rotation au moyeu et présentant une portion interne ; et
- fournir un support (1) portant des garnitures de friction (4, 5) et présentant une portion interne (13) annulaire,
le procédé de fabrication comportant en outre :
- disposer le voile (3) et le support (1) de part et d'autre de la collerette (12);
solidariser le voile et le support l'un contre l'autre par une pluralité d'organes de fixation (6), ladite solidarisation entraînant une déformation élastique du support par un appui continu de la collerette de telle sorte qu'une zone préalablement plane du support soit déformée sous forme d'une zone élastiquement déformable de forme tronconique (13) et que le support (1) exerce une force élastique de serrage de la collerette (12) contre la portion interne du voile (14).
